# EUROPEAN PATENT SPECIFICATION

(11) **EP 4 625 945 B1**
(45) Date of publication and mention of the grant of the patent: **10.06.2026**
(21) Application number: 24165802.0
(22) Date of filing: 25.03.2024
(51) Int. Cl.: H04L 67/12, H04L 67/562

(54) **METHOD AND SYSTEM FOR IDENTIFICATION AND RETRIEVAL OF DATA OF INTEREST IN AN OPC UA PUBSUB AUTOMATION NETWORK**
VERFAHREN UND SYSTEM ZUR IDENTIFIZIERUNG UND WIEDERAUFFINDUNG VON INTERESSIERENDEN DATEN IN EINEM OPC UA PUBSUB AUTOMATISIERUNGSNETZWERK
PROCÉDÉ ET SYSTÈME D'IDENTIFICATION ET DE RÉCUPÉRATION DE DONNÉES D'INTÉRÊT DANS UN RÉSEAU D'AUTOMATISATION OPC UA PUBSUB

(43) Date of publication of application: 01.10.2025
(73) Proprietor: ABB SCHWEIZ AG, 5400 Baden (CH)
(72) Inventor: GRÜNER, Sten, 69514 Laudenbach (DE); KARAAGAC, Abdulkadir, 68526 Ladenburg (DE); BRAUN, Roland, 53859 Niederkassel Lülsdorf (DE); HEUSCHKEL, Jens, 64331 Weiterstadt (DE); AMELUNG, Rhaban, 64347 Griesheim (DE)
(74) Representative: Maiwald GmbH

(56) References cited:
- SHIZHU LONG SKYWORTH DIGITAL TECHNOLOGY CO LTD CHINA: "The Architecture for Smart Home Gateway;C3", vol. 6/9, 9 November 2020 (2020-11-09), pages 1 - 14, XP044304004, Retrieved from the Internet <URL:https://www.itu.int/ifa/t/2017/sg9/docs/rgm/Q6-201110/DOC/T17-SG09RGM-Q6-201110-DOC-0003.docx> [retrieved on 20201109]

## Description

### Field of the invention

The present disclosure relates to a method and system for efficient discovery and processing of machine-readable publisher information sources in an OPC UA PubSub automation network.

### Background

In contemporary methods of information retrieval within the OPC UA PubSub network via gateway devices, discovering data of interest along with their sources, as well as identifying field devices and their associated parameters, typically requires manual configuration. This process involves compiling a list of endpoints, including IP addresses of devices or brokers and topic trees, and configuring cybersecurity measures to ensure secure data collection. Following this setup, users are required to manually navigate through available information and select the desired data.

Manual configuration in PubSub networks poses several challenges that can hinder efficiency and scalability. Firstly, the process is time-consuming and prone to errors, as it relies heavily on human intervention. Mistakes in compiling endpoint lists or configuring cybersecurity measures can lead to security vulnerabilities or data inconsistencies. Additionally, the manual selection of data of interest may result in overlooking valuable information or selecting irrelevant data, leading to suboptimal system performance. Furthermore, as the network grows in complexity with an increasing number of devices and data sources, manual configuration becomes increasingly cumbersome and difficult to manage. This can impede the ability to adapt the network to evolving requirements and technologies efficiently.

Overall, the reliance on manual configuration in PubSub networks highlights the need for automated solutions to streamline operations and enhance system reliability.

The to be solved problem is the reduction of the above-mentioned manual, time-costly and error-prone efforts to configure manually the gateway device in the OPC UA PubSub automation network. Document: SHIZHU LONG SKYWORTH DIGITAL TECHNOLOGY CO LTD CHINA: "The Architecture for Smart Home Gateway;C3",ITU-T DRAFT; STUDY PERIOD 2017-2020; STUDY GROUP 9; SERIES C3, INTERNATIONAL TELECOMMUNICATION UNION, GENEVA; CH,vol. 6/9 9 November 2020 discusses a system architecture for the Smart Home Gateway to implement the functional requirements for Smart Home Gateway in a residential STB and cable network.

### Summary

The present invention is defined by the subject-matter of the independent claims. Additional features of the invention are presented in the dependent claims.

According to an aspect of the invention, a method for identification and retrieval of data of interest in an Open Platform Communications Unified Architecture, OPC UA, PubSub automation network, wherein the OPC UA PubSub automation network comprises at least one publisher, providing publisher data, the method comprises the following steps. Connecting a gateway device to the OPC UA PubSub automation network. Discovering, by the gateway device, at least one information source in the OPC UA PubSub automation network. Identifying and connecting to a broker by the gateway device, wherein the broker manages the publisher data provided by the at least one publisher. Determining, by the gateway device, at least one matched information source from the discovered at least one information source based on information intent of the gateway device and PubSub meta information of the publisher data provided by the broker. Retrieving, by the gateway device, the data of interest from the at least one matched information source.

OPC UA is a cross-platform, IEC 62541 standard for data exchange from sensors to cloud application. In other words, OPC UA provides a standardized way to exchange data between different OPC UA nodes in an OPC UA network.

The term "OPC UA PubSub automation network", as used herein, describes a PubSub network based on the OPC UA. PubSub provides an asynchronous messaging model between so called publisher, which provide publisher data in a broadcast manner or to a broker component, and so-called subscriber, which consume the provided publisher data. The publishers provide their publisher data independent from the subscribers. Each publisher data is associated with a topic. The subscribers subscribe to topics that they are interested in and receive the respective publisher data. In other words, the publishers have no information about who uses the provided publisher information, and the subscribers have no information who provides the publisher information. Thus, due to PubSub communication pattern, Publishers and Subscriber are loosely coupled, i.e., they may be not aware of each other at all.

The term "gateway device", as used herein, comprises a physical entity and/or logical entity. In other words, the gateway device comprises devices and/or services. Preferably, the gateway device consumes, processes and/or ingests information provided within the OPC UA PubSub automation network.

Preferably, connecting a gateway device to the OPC UA PubSub automation network comprises connecting physically (plug in) or wireless the gateway device into the OPC UA PubSub automation network, and/or installing a software or service to the OPC UA PubSub automation network.

The term "information source", as used herein, relates to any OPC UA entity, also referred to as OPC UA node, in the OPC UA PubSub automation network that provides information. This for example comprises publishers but also the broker or other data servers.

The term "data of interest", as used herein, comprises information within the OPC UA PubSub automation network that may be of interest to either a user accessing the gateway device or the gateway device itself.

The term "publisher", as used herein, comprises a physical or logical entity providing information or events. Preferably, the publisher comprises a field device like a sensor or an actuator. Publishers publish data using OPC UA PubSub compliant protocol like Unified Architecture Datagram Protocol, UADP, Message Queuing Telemetry Transport, MQTT, or Advanced Message Queuing Protocol, AMQP. Publishers may implement OPC UA client/server, CS, communication in addition to the PubSub protocol.

Preferably, the OPC UA PubSub automation network comprises further at least one subscriber. The term "subscriber", as used herein, comprises a physical or logical consumers of information provided by Publishers. Subscribers use the same protocol as Publishers. Additionally, they might also implement OPC UA CS communication. Preferably, the subscriber is a physical or logical entity wherein subscriber obtain and consume data provided by the at least one publisher. Preferably, subscribers need to define the at least one set of topics they are interested in.

Preferably, a OPC UA PubSub automation network participant can be a publisher and a subscriber at the same time.

Preferably, the identifying and connecting to a broker by the gateway device further comprises detection whether the OPC UA PubSub automation network is broker-based. Preferably, the OPC UA PubSub automation network is a broker-based OPC UA PubSub automation network. Preferably, identifying and connecting to a broker by the gateway device further comprises automatic discovery of the broker.

The term "broker", as used herein comprises a message broker. In case of some protocols, like MQTT or AMQP a dedicated "broker" component is required, which acts as a middleware between "publisher" and "subscriber".

Preferably, the identifying and connecting to a broker by the gateway device further comprises detection of broker URL/IP from OPC UA PubSub automation network. Preferably, the broker in the OPC UA PubSub automation network is a MQTT broker, wherein the MQTT Broker describes a Message Queuing Telemetry Transport broker.

Thus, an automatic method for identifying the broker and connecting to it by the gateway device is provided.

Further, the method provides integration of the gateway device into the OPC UA PubSub automation network.

Preferably, after identifying the broker and connecting to it by the gateway device, the method further comprises discovering the at least one of the OPC UA nodes within the OPC UA PubSub automation network, wherein the OPC UA nodes comprise Global Discovery and Alias servers, GDS, Secure Key Service, SKS, FX communication managers, and Ordinary OPC UA servers.

GDS is an optional OPC UA node that allows to list OPC UA CS server which can be registered on it. Discovery functionality can be implemented within a central unity or in a decentralized manner using LDS-ME (mDNS) or similar technologies.

SKS is an optional OPC UA node that is used to distribute keys for message security in case an encryption is used between publishers and subscribers. SKS is implemented using a set of predefined OPC UA nodes/methods.

FX Communication Manager is an optional OPC UA node maintaining and applying the OPC UA FX connection configuration - this is a set of high-level bi-directional configurations between publishes and subscribers. FX connections are abstractions of two bi-direction PubSub connections between a publisher and subscriber.

Preferably, the gateway device connects to the discovered elements within the OPC UA PubSub automation network.

Connecting to the GDS or SKS, by the gateway device may require broker credentials.

Thus, an automatic method for identifying OPC UA nodes within the OPC UA PubSub automation network and connecting to them by the gateway device is provided.

The user may be prompted to provide needed credentials and/or certificates needed for the connection to the GDS or SKS.

Preferably, the discovering the at least one of the OPC UA nodes further comprises obtaining the address of said discovered elements by scanning PubSubConnection-typed objects within discovered elements. The term "OPC UA information model" comprises organizational framework that defines, characterizes, and relates information sources of the OPC UA PubSub automation network. Preferably, the OPC UA information models comprises known object types or dictionary references.

Preferably, the publisher data comprise information about OPC UA nodes and/or subset information which is been already published by the publisher.

Further, this information is encoded into the OPC UA information model, wherein this information is obtained either directly by the publisher itself, or by using an intermediate information source like an OPC UA aggregating server.

Preferably, the determining, by the gateway device, at least one matched information source further comprises search and selection of information sources based on information intent wherein the information intent is pre-defined data intent, preconfigured data intent and/or application-specific data intent.

Preferably, the information intent comprises a text query and/or a structural query describing the information of interest.

Preferably, after discovering at least one information source in the OPC UA PubSub automation network, a set of matching information and its source is filtered, wherein the matched information and its source is compared to the information intents.

Preferably, the matching process can be supported by included semantic information within the OPC UA information models like known object types or dictionary references.

Preferably, technical implementation of the matching process includes natural language processing, structured queries, and further matching techniques.

In an example, informal query formulation could be "active speed output of a variable frequency drive".

In another example, more formal query formulation could be "current setpoint parameter of device 1".

Thus, an improved automated method for determining and discovery the information source in the OPC UA PubSub automation network is provided.

Preferably, the selection of information sources comprises using PubSub meta information, wherein for example the PubSub meta information comprises frequency of updates, topic names or names of FX connections.

Preferably, the determining, by the gateway device, at least one matched information source further comprises using OPC UA alias mechanisms to resolve a list of alternative OPC UA variable names, wherein the OPC UA alias mechanisms comprises mechanisms for determining alternate well-defined name for any node in the system.

Preferably, the determining, by the gateway device, at least one matched information source further comprises using PubSub and OPC UA FX extension of information search, wherein said extension comprises using additional dynamic semantics of emerging and changing FX connections and/or implicit dependencies between publishers and subscribers (e.g., knowledge that a PLC is broadcasting to the same group which drive's setpoint is subscribed to).

Thus, an improved automated method is provided for determining matched information source from the discovered at least one information source based on information intent of the gateway device and PubSub meta information of the publisher data provided by the broker within the OPC UA PubSub automation network.

Preferably, retrieving, further comprises redundancy detection of data of interest.

Preferably, retrieving comprises subscribing to an already published data, or reconfiguring the provider within the OPC UA PubSub automation network.

Preferably, the method further comprises periodic detection of joining/disjoining devices and OPC UA nodes, for example mobile devices such as AGVs.

In an example, an edge computer discovers generally available information of OPC UA nodes and information subset which has been already published using OPC UA PubSub techniques wherein this information is encoded into the OPC UA information model.

Preferably, the method further comprises after retrieving, obtaining the data of interest, by the gateway device.

Preferably, the method is a computer-implemented method.

In an example, the gateway device obtains matched information sources of OPC UA nodes and information subset which have been already published using OPC UA PubSub techniques wherein said information is encoded into the OPC UA information model.

Considering PubSub meta information of the publisher data and information intent of the gateway device to determine the matched information sources using a broker allows to reuse existing published DataSetMessages of publisher data and/or existing security groups. For example, in case a dedicated publisher is already providing some information matches gateway device data of interest, it does not aim to re-creating an additional publishing request to the publisher, but instead subscribes to an already existing published data set.

Thus, an improved automated method is provided for a gateway device to allow its integration into an available OPC UA PubSub automation network for the purpose of a semi-automated information flow discovery, based on the information intent and PubSub meta information of the publisher data.

In a preferred embodiment, the method further comprises providing, by the gateway device, the data of interest to at least one other network.

Providing, by the gateway device, the data of interest to at least one other network describes PubSub reusing the data of interest.

Retrieved, or in other words obtained, data of interest may be re-published by the gateway device to another network via a cloud-broker.

Preferably, the obtained data by the gateway will be ingested into a cloud system, typically via a broker based OPC UA PubSub.

Obtained data of interest may be ingested or may be processed by the gateway device.

Preferably, instead of ingestion, the gateway device process locally the obtained data from OPC UA PubSub automation network (e.g., gateway device calculates OEE (overall equipment efficiency) of a dedicated device based on its operational state).

Preferably, the providing, by the gateway device, the data of interest to at least one other network further comprises efficient cloud ingestion by passing local published data to the cloud-broker with minimal modifications.

In an example, if the OPC UA PubSub automation network within the factory network is broker-based, a large amount of obtained data, namely the data set payload, may be reused directly to allow a more efficient ingestion. In this case the gateway device needs to modify the data of interest to forward it to the cloud-broker.

One advantage of this method is that it reduces the necessity for the gateway device to decode the payload of the data of interest. While an encoding-conversion may be needed to match the requirements of the cloud-broker for example encoding from binary-based UADP to text-based JSON.

Additionally, the gateway device can take over the task of uploading the relevant information model fragments to the cloud-broker or the OPC UA cloud library based on the information within the local OPC UA servers.

Preferably, the providing comprises outputting, by the gateway device the data of interest for users.

Thus, an improved method for providing the retrieved data of interest to at least one other network, is provided.

In a preferred embodiment, the other network comprises a cloud system.

Thus, an improved method for providing the retrieved data of interest to at least one other cloud network, is provided.

In a preferred embodiment, the providing the data of interest comprises transforming the data of interest into a format, readable for the other network.

Preferably, if no transmission control protocol, TCP, communication is used within the OPC UA PubSub automation network (e.g., User Datagram Protocol, UDP, based PubSub), published data are transformed into suitable format and re-published, wherein the TCP is a connection-based protocol and the UDP is connectionless.

In a preferred embodiment, the retrieving the data of interest from the at least one matched information source comprises determining and determining comprises following steps.

If the matched information source has been already published by at least one of the publishers, the method further comprises subscribing, by the gateway device, the publisher associated with the data of interest.

And if the matched information source has not been already published by at least one of the publishers, the method further comprises requesting, by the gateway device, PubSub re-configuration within the OPC UA PubSub automation network.

Preferably, the retrieving the data of interest further comprises a search to perform whether the data of interest is already published by at least one of publishers within the OPC UA PubSub automation network.

Preferably, if the data of interest has been published by a publisher, the gateway device subscribe the publisher, wherein the configuration of publisher will not be changed.

Preferably, subscribing further comprises adding gateway device to a list of subscribers of the publisher published data without changing configuration of OPC UA PubSub automation network wherein the configuration of OPC UA PubSub automation network comprises non-real-time communication.

Preferably, subscribing further comprises adding gateway device to the list of subscribers of the publisher without additional sampling load on the publisher.

To collect the data of interest as efficient as possible, this method further comprises reusing existing published DataSetMessages containing the data of interest where possible. Based on the knowledge of existing publishers and information they publish; the gateway device identifies required publishes (data of interest) and PublishedDataSets with the associated security group.

The term "DataSetMessage" comprises an immutable payload of the OPC UA PubSub automation network message handed off to the broker for delivery by the publisher.

The term "PublishedDataSets" comprise a list of monitored variables or an event selection.

Preferably, the gateway device joins an existing security group by contacting responsible SKS and obtains the needed cryptographic keys to decrypt the obtained data.

Preferably, if the matched information source has not been already published by at least one of the publishers, the gateway device sends a PubSub re-configuration request within the OPC UA PubSub automation network.

Preferably, the requesting PubSub re-configuration requires confirmation of the user and/or the user is required to provide needed information (e.g., credentials/keys).

Furthermore, a PubSub re-configuration may be needed to allow an additional subscriber to join the publisher, in case a real-time communication protocol (e.g., IEEE TSN) is used.

Preferably, if an existing publisher configuration cannot be reused due to failure of obtaining the keys, the gateway is tried out a creation of a new PublishedDataSet, by using available FX communication manager, or interacting with respective PubSub configuration within the identified publisher.

Preferably, if creation of a new PublishedDataSet is failed, a fallback to OPC UA client/server-based communication is tried out, by the gateway device, relying on OPC UA client/server subscription mechanisms, wherein these mechanisms are not to be mixed with the OPC UA PubSub.

Thus, an improved automated method for subscribing the publisher published data of interest, is provided. Furthermore, in case no publisher is found, the re-configuration requesting will be performed by the gateway device.

In a preferred embodiment, the at least one matched information source is determined using an OPC UA Information model, providing information about entities and data in the OPC UA PubSub automation network Preferably, information model browsing upfront involves examining, by the gateway device, structure of the published data within the OPC UA PubSub automation network before actively participating in it and subscribing to the related publisher.

In an example, before subscribing specific topics, the gateway device in the OPC UA PubSub automation network would analyse the available information models to understand the types of data being published, the format of data and/or messages, and the relationships between different topics or channels. This upfront exploration ensures that the gateway device has a clear understanding of the data flow and can make informed decision about which topics to subscribe to.

Preferably, by browsing the information model upfront, edge device can avoid misunderstandings, identify potential data sources.

Thus, compatibility between publishers and gateway device within the OPC UA PubSub automation network will be ensured.

Thus, an improved automated method for the examining and analysing the structure of the published data within the OPC UA PubSub automation network, by the gateway device before subscribing to the related publisher, is provided.

Preferably, the determining the at least one matched information source comprises using PubSub-specific properties.

Preferably, the determining the at least one matched information source comprises using OPC UA PubSub specifications for identification, selection and processing the published device information and the PubSub meta information.

Preferably, the determining the at least one matched information source comprises using concepts of OPC UA FX, which extend OPC UA PubSub for identification, selection and processing the published data, related sources, and the PubSub meta information.

An alternative information source may be the FX communication manager since it contains a high-level data flow between publisher and subscriber wherein an abstraction is used called functional entity.

Thus, an improved automated method for the identification, selection and processing the published data, related sources, and their PubSub meta information within the OPC UA PubSub automation network, is provided.

In a preferred embodiment, the PubSub-specific properties comprise publishing intervals and/or information about publisher describing the information intent.

Preferably, the PubSub-specific properties comprise publishing intervals and/or information about publisher and subscribers describing the information intent within the structural queries describing the information-intent.

In an example for the PubSub-specific properties could be "setpoint published at least every 100 ms" or in another example it could be or "setpoints with at least one subscriber".

Regarding the information about publisher and subscribers it should be considered that normally obtaining publisher/subscriber dependencies may be not possible due to the loose coupling mechanisms roots of PubSub patterns and may require elevated rights to access non-standardized diagnostic information of the broker.

Thus, an improved automated method for determining the matched information source within the OPC UA PubSub automation network, is provided.

In a preferred embodiment, the information intent comprises semantic information.

The term "semantic information", as used herein, comprises information about the information intent like topics.

Preferably, the semantic information comprises meaning or content conveyed by the information intent.

Preferably, the semantic information interpretates the information intent, including the relationships and connections between different pieces of information and topics.

Preferably, the semantic information understands the context and significance of the information intent, in relation to the concepts, entities, or ideas represented by the information intent.

Thus, an improved automated method for determining the matched information source based on semantic information of the information intent within the OPC UA PubSub automation network, is provided.

Preferably, the PubSub meta information comprises frequency of updates, topic names and/or names of FX connections.

Preferably, PubSub meta information comprises topic names, subscription detail message attributes publisher and subscriber information configuration settings.

Preferably, the PubSub meta information provides information about the topic, including its purpose, access permissions, message format, and attributes.

This PubSub meta information helps the gateway device understand the type of published data on the topic and how to interpret it effectively.

Thus, an improved automated method for understanding the type of published data on the topic and how to interpret it by the gateway device is provided.

In a preferred embodiment, the method further comprises obtaining, by the gateway device, security data from the broker, wherein the security data allows the gateway device to retrieve encrypted data of interest.

Preferably, the gateway device obtains security data and/or keys from the broker for message security in case an encryption is used between publishers and subscribers and/or to retrieve encrypted data of interest.

Thus, an improved automated method for retrieving encrypted data of interest within the OPC UA PubSub automation network, is provided.

In a preferred embodiment, the gateway device comprises an edge device gateway.

The gateway device comprises a physical entity and/or logical entity. In other words, the gateway device comprises devices and/or services.

According to an aspect of the invention, a system for industrial information identification and retrieval in an OPC UA PubSub automation network, wherein the system is configured to perform the method, as described herein.

According to an aspect of the invention, a system for identification and retrieval of data in an OPC UA PubSub automation network comprises the following. At least one publisher, configured to provide publisher data. A broker, configured to manage the publisher data provided by the at least one publisher. A gateway device, configured to connect to the OPC UA PubSub automation network, discover at least one information source in the OPC UA PubSub automation network, identify and connect to a broker, determine at least one matched information source from the discovered at least one information source based on information intent and semantic information provided by the broker, and retrieve the data of interest from the at least one matched information source.

Preferably, the system further comprises Global Discovery and Alias servers GDS, Secure Key Service SKS, FX communication managers, and Ordinary OPC UA servers wherein these elements will be discovered by the gateway device.

Preferably, the OPC UA PubSub automation network comprises further Global Discovery Server GDS, allowing to list OPC UA CS server which can be registered on it.

Preferably, in GDS, search and discovery functionality are implemented within a central unity or in a decentralized manner using LDS-ME (mDNS).

Preferably, for connecting to the GDS may also be required to obtain needed credentials to log in into OPC UA entities, or user may be prompted to provide needed credentials and/or certificates and further information needed to log in.

Preferably, the OPC UA PubSub automation network comprises further Secure Key Service SKS to distribute keys for message security in case an encryption is used between publishers and subscribers.

Preferably, SKS is implemented using a set of predefined OPC UA nodes/methods.

Preferably, the OPC UA PubSub automation network comprises further OPC UA FX Communication Manager for maintaining and applying the OPC UA FX connection configuration.

Preferably, the OPC UA FX connection configuration comprises a set of high-level bi-directional configurations between publishes and subscribers.

Preferably, the OPC UA FX connections comprise abstractions of two bi-direction PubSub connections between a publisher and a subscriber.

The gateway device uses following techniques to discover OPC UA nodes of OPC UA PubSub automation network: LDS-ME / mDNS, GDS, DHCP information obtained along with a DHCP lease, known DNS names which are dynamically re-mapped on site (e.g., broker edge), IP/Port scan, proprietary protocols, and user input.

Further the gateway device uses asset administration shell submodels, to discover OPC UA nodes of OPC UA PubSub automation network, wherein asset administration shell submodels describes OPC UA endpoints explicitly via a submodel or implicitly via qualifiers or variable content.

The gateway device connects to the other OPC UA nodes of OPC UA PubSub automation network, like GDS or SKS, wherein needed credentials to log in will be required.

An example is presented in the following:
- topic name: "WeatherData",
- description: a topic for publishing real-time weather updates,
- permissions: gateway device and/or subscribers must have access to view this topic.
- message format: JSON

"Location": Specifies the geographical location for which the weather data pertains.

"Temperature": Indicates the temperature at the specified location.

"Humidity": Represents the humidity level at the specified location.

"Timestamp": Provides the timestamp when the weather data was collected.

In this example, the PubSub meta information provides information about the "WeatherData" topic, including its purpose, access permissions, message format, and attributes. This PubSub meta information helps subscribers understand the type of data available on the topic and how to interpret it effectively.

According to an aspect of the invention, a computer program product, wherein when the computer program product runs on a computer, the computer is enabled to perform the method, as described herein.

According to an aspect of the invention, a computer-readable storage medium comprising computer instructions, wherein when the computer instructions are run on a computer, the computer is enabled to perform the method, as described herein.

### Brief description of the drawings

Exemplary embodiments of the invention will be described in the following with reference to the accompanying drawings:
Fig. 1 illustrates a schematic diagram of a system for identification and retrieval of data of interest in a broker-based OPC UA PubSub automation network according to an embodiment of the application.
Fig.2 illustrates a flowchart of the method of identification and retrieval of data of interest in a broker-based OPC UA PubSub automation network according to another embodiment of the application.

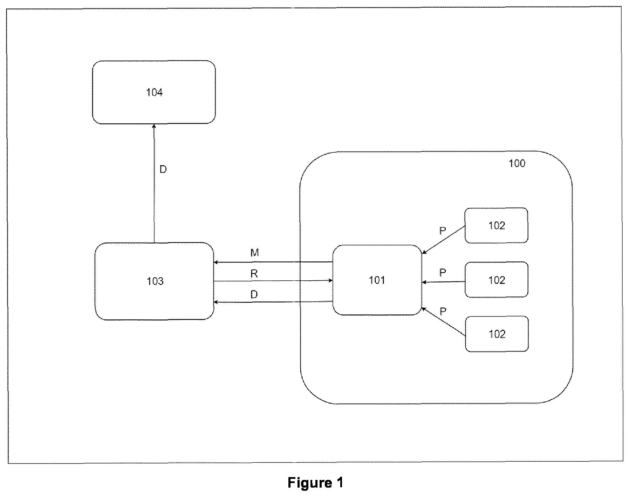

Fig. 1 illustrates a schematic diagram of a system for identification and retrieval of data in an OPC UA PubSub automation network 100 comprises the following. At least one publisher 102, configured to provide publisher data P. A broker 101, configured to manage the publisher data P provided by the at least one publisher 102. A gateway device 103, configured to connect to the OPC UA PubSub automation network 100, discover at least one information source in the OPC UA PubSub automation network 100, identify and connect to a broker 101, determine at least one matched information source from the discovered at least one information source based on information intent and semantic information provided by the broker 101, and retrieve the data of interest D from the at least one matched information source. In order to find information sources matching to the interest of the gateway device 103, the gateway device 103 receives PubSub meta information M of the publisher data P from the broker. The gateway device 103 uses the semantic information S and information intent I of the gateway device 103 that reflects the interest of the gateway device 103 to find the interesting topics and respective information sources matching the interest of the gateway device 103. With the help of a subscription request R, the gateway device 103 subscribes to the matched information sources at the broker 101 to retrieve the data of interest.

Preferably, the OPC UA PubSub automation network further comprises OPC UA nodes like Global Discovery and Alias servers GDS, Secure Key Service SKS, FX managers, and Ordinary OPC UA servers wherein these nodes will be discovered by the gateway device.

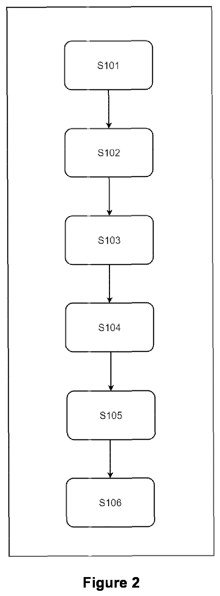

Fig. 2 is a flowchart of the method of identification and retrieval of data of interest in an OPC UA PubSub automation network according to an embodiment of the application. The method provided in this embodiment of this application includes the following steps.

In the first step S101, a gateway device to the OPC UA PubSub automation network, will be connected.

In the second step S102, at least one information source in the OPC UA PubSub automation network, will be discovered.

In the next step S103, a broker by the gateway device will be identified and the gateway device will be connected to the broker, wherein the broker manages the publisher data provided by the at least one publisher.

In the next step S104, by the gateway device, at least one matched information source from the discovered at least one information source based on information intent and PubSub meta information provided by the broker, will be determined.

In the next step S105, by the gateway device, the data of interest from the at least one matched information source will be retrieved.

Preferably, in the next step S106, by the gateway device, the data of interest to at least one other network assessments, will be provided.

Provided data may be re-published by the gateway device towards a cloud-hosted broker.

In a possible embodiment, the obtained data by the gateway will be re-published into a cloud system, typically via a broker based OPC UA PubSub.

Preferably, the providing comprises outputting, by the gateway device the data of interest for users.

## Claims

1. A method for identification and retrieval of data of interest in an Open Platform Communications Unified Architecture, OPC UA, PubSub automation network, wherein the OPC UA PubSub automation network comprises at least one publisher (102) providing publisher data (P), the method comprising:
connecting a gateway device (103) to the OPC UA PubSub automation network;
discovering, by the gateway device (103), at least one information source in the OPC UA PubSub automation network;
identifying and connecting to a broker, (101) by the gateway device (103), wherein the broker (101) manages the publisher data (P) provided by the at least one publisher (102);
determining, by the gateway device (103), at least one matched information source from the discovered at least one information source based on information intent of the gateway device (103) and PubSub meta information (M) of the publisher data (P) provided by the broker (101);
retrieving, by the gateway device (103), the data of interest (D) from the at least one matched information source.

2. The method according to claim 1, wherein the method further comprises providing, by the gateway device (103), the data of interest (D) to at least one other network (104).

3. The method according to claim 2,
wherein the other network (104) comprises a cloud system.

4. The method according to any one of the claims 2 or 3, wherein the providing the data of interest (D) comprises transforming the data of interest into (D) a format, readable for the other network.

5. The method according to any one of the preceding claims, retrieving the data of interest (D) from the at least one matched information source comprises determining wherein
if the matched information source has been already published by at least one of the at least one publishers (102), the method further comprises subscribing, by the gateway device (103), the publisher associated with the data of interest (D); and
if the matched information source has not been already published by at least one of the at least one publishers (102), the method further comprises requesting, by the gateway device (103), PubSub re-configuration within the OPC UA PubSub automation network.

6. The method according to any one of the preceding claims, wherein the at least one matched information source is determined using an OPC UA Information model, providing information about entities and data in the OPC UA PubSub automation network.

7. The method according any one of the preceding claims, wherein the determining the at least one matched information source comprises using PubSub-specific properties.

8. The method according to claim 7, wherein the PubSub-specific properties comprise publishing intervals and/or information about the at least one publisher (102) describing the information intent.

9. The method according to any one of the preceding claims, wherein the information intent comprises semantic information.

10. The method according to any one of the preceding claims, wherein the PubSub meta information comprises frequency of updates, topic names and/or names of FX connections.

11. The method according to any one of the preceding claims, obtaining, by the gateway device (103), security data from the broker (101), wherein the security data allows the gateway device (103) to retrieve encrypted data of interest (D).

12. The method according to any one of the preceding claims, wherein the gateway device (103) comprises an edge device gateway.

13. A system for industrial information identification and retrieval in an OPC UA PubSub automation network,
wherein the system is configured to perform the method according to any one of claims 1 to 12.

14. A computer-readable storage medium, comprising computer instructions, wherein when the computer instructions are run on a computer, the computer is enabled to perform the method according to any one of claims 1 to 12.

15. A computer program product, wherein when the computer program product runs on a computer, the computer is enabled to perform the method according to any one of claims 1 to 12.

## Patentansprüche

1. Verfahren zur Identifizierung und zum Abruf von Daten von Interesse in einem Open Platform Communications Unified Architecture, OPC UA, PubSub-Automatisierungsnetzwerk, wobei das OPC UA PubSub-Automatisierungsnetzwerk mindestens einen Publisher (102) aufweist, der Publisher-Daten (P) bereitstellt, wobei das Verfahren umfasst:
Verbinden einer Gateway-Vorrichtung (103) mit dem OPC UA PubSub-Automatisierungsnetzwerk;
Erkennen mindestens einer Informationsquelle im OPC UA PubSub-Automatisierungsnetzwerk durch die Gateway-Vorrichtung (103);
Identifizieren und Verbinden mit einem Broker (101) durch die Gateway-Vorrichtung (103), wobei der Broker (101) die von dem mindestens einen Publisher (102) bereitgestellten Publisher-Daten (P) verwaltet;
Bestimmen von mindestens einer übereinstimmenden Informationsquelle aus mindestens einer ermittelten Informationsquelle durch die Gateway-Vorrichtung (103) auf der Grundlage der Informationsabsicht der Gateway-Vorrichtung (103) und der PubSub-Metainformationen (M) der vom Broker (101) bereitgestellten Publisher-Daten (P);
Abrufen der Daten von Interesse (D) aus mindestens einer übereinstimmenden Informationsquelle durch die Gateway-Vorrichtung (103).

2. Verfahren nach Anspruch 1, wobei das Verfahren ferner umfasst, dass die Gateway-Vorrichtung (103) die Daten von Interesse (D) an mindestens ein weiteres Netzwerk (104) bereitstellt.

3. Verfahren nach Anspruch 2,
wobei das andere Netzwerk (104) ein Cloud-System umfasst.

4. Verfahren nach einem der Ansprüche 2 oder 3, wobei das Bereitstellen der Daten von Interesse (D) das Umwandeln der Daten von Interesse (D) in ein für das weitere Netzwerk (104) lesbares Format umfasst.

5. Verfahren nach einem der vorstehenden Ansprüche, wobei das Abrufen der Daten von Interesse (D) aus mindestens einer übereinstimmenden Informationsquelle das Bestimmen umfasst, ob
die übereinstimmende Informationsquelle bereits von mindestens einem der mindestens einen Publisher (102) veröffentlicht wurde, wobei das Verfahren ferner das Abonnieren des mit den Daten von Interesse (D) verbundenen Publishers (102) durch die Gateway-Vorrichtung (103) umfasst; und
die übereinstimmende Informationsquelle noch nicht von mindestens einem der mindestens einen Publisher (102) veröffentlicht wurde, wobei das Verfahren ferner das Anfordern einer PubSub-Neukonfiguration innerhalb des OPC UA PubSub-Automatisierungsnetzwerks durch die Gateway-Vorrichtung (103) umfasst.

6. Verfahren gemäß einem der vorstehenden Ansprüche, wobei die mindestens eine übereinstimmende Informationsquelle unter Verwendung eines OPC UA-Informationsmodells ermittelt wird, das Informationen über Entitäten und Daten im OPC UA PubSub-Automatisierungsnetzwerk bereitstellt.

7. Verfahren nach einem der vorstehenden Ansprüche, wobei das Bestimmen der mindestens einen übereinstimmenden Informationsquelle die Verwendung von PubSub-spezifischen Eigenschaften umfasst.

8. Verfahren nach Anspruch 7, wobei die PubSub-spezifischen Eigenschaften Veröffentlichungsintervalle und/oder Informationen über den mindestens einen Publisher (102) umfassen, die die Informationsabsicht beschreiben.

9. Verfahren nach einem der vorangehenden Ansprüche, wobei die Informationsabsicht semantische Informationen umfasst.

10. Verfahren nach einem der vorstehenden Ansprüche, wobei die PubSub-Metainformationen Aktualisierungshäufigkeit, Themennamen und/oder Namen von FX-Verbindungen umfassen.

11. Verfahren gemäß einem der vorstehenden Ansprüche, bei dem die Gateway-Vorrichtung (103) Sicherheitsdaten vom Broker (101) abruft, wobei die Sicherheitsdaten es der Gateway-Vorrichtung (103) ermöglichen, verschlüsselte Daten von Interesse (D) abzurufen.

12. Verfahren nach einem der vorstehenden Ansprüche, wobei die Gateway-Vorrichtung (103) ein Edge-Geräte-Gateway umfasst.

13. Ein System zur Identifizierung und zum Abruf industrieller Informationen in einem OPC UA PubSub-Automatisierungsnetzwerk,
wobei das System derart eingerichtet ist, dass es das Verfahren gemäß einem der Ansprüche 1 bis 12 ausführt.

14. Ein computerlesbares Speichermedium, das Computerbefehle umfasst, wobei der Computer, wenn die Computerbefehle auf einem Computer ausgeführt werden, in die Lage versetzt wird, das Verfahren gemäß einem der Ansprüche 1 bis 12 durchzuführen.

15. Ein Computerprogrammprodukt, wobei, wenn das Computerprogrammprodukt auf einem Computer ausgeführt wird, der Computer in die Lage versetzt wird, das Verfahren gemäß einem der Ansprüche 1 bis 12 auszuführen.

## Revendications

1. Procédé d'identification et de récupération de données d'intérêt dans un réseau d'automatisation PubSub à architecture unifiée de communications à plate-forme ouverte, OPC UA, dans lequel le réseau d'automatisation PubSub OPC UA comprend au moins un éditeur (102) fournissant des données d'éditeur (P), le procédé comprenant :
la connexion d'un dispositif passerelle (103) au réseau d'automatisation PubSub OPC UA ;
la découverte, par le dispositif passerelle (103), d'au moins une source d'informations dans le réseau d'automatisation PubSub OPC UA ;
l'identification et la connexion à un courtier (101) par le dispositif passerelle (103), dans lequel le courtier (101) gère les données d'éditeur (P) fournies par le ou les éditeurs (102) ;
la détermination, par le dispositif passerelle (103), d'au moins une source d'informations appariée à partir de la ou des sources d'informations découvertes sur la base de l'intention d'information du dispositif passerelle (103) et des méta-informations PubSub (M) des données d'éditeur (P) fournies par le courtier (101) ;
la récupération, par le dispositif passerelle (103), des données d'intérêt (D) à partir de la ou des sources d'informations appariées.

2. Procédé selon la revendication 1, dans lequel le procédé comprend en outre la fourniture, par le dispositif passerelle (103), des données d'intérêt (D) à au moins un autre réseau (104).

3. Procédé selon la revendication 2,
dans lequel l'autre réseau (104) comprend un système en nuage.

4. Procédé selon l'une quelconque des revendications 2 ou 3, dans lequel la fourniture des données d'intérêt (D) comprend la transformation des données d'intérêt en (D) un format lisible pour l'autre réseau.

5. Procédé selon l'une quelconque des revendications précédentes, dans lequel la récupération des données d'intérêt (D) à partir de la ou des sources d'informations appariées comprend la détermination pour savoir
si la source d'informations appariée a déjà été publiée par au moins un du ou des éditeurs (102), le procédé comprend en outre la souscription, par le dispositif passerelle (103), de l'éditeur associé aux données d'intérêt (D) ; et
si la source d'informations appariée n'a pas déjà été publiée par au moins un du ou des éditeurs (102), le procédé comprend en outre la demande, par le dispositif passerelle (103), d'une reconfiguration PubSub dans le réseau d'automatisation PubSub OPC UA.

6. Procédé selon l'une quelconque des revendications précédentes, dans lequel la ou les sources d'informations appariées sont déterminées en utilisant un modèle d'informations OPC UA, fournissant des informations concernant des entités et des données dans le réseau d'automatisation PubSub OPC UA.

7. Procédé selon l'une quelconque des revendications précédentes, dans lequel la détermination de la ou des sources d'informations appariées comprend l'utilisation de propriétés spécifiques de PubSub.

8. Procédé selon la revendication 7, dans lequel les propriétés spécifiques de PubSub comprennent des intervalles de publication et/ou des informations concernant le ou les éditeurs (102) décrivant l'intention d'information.

9. Procédé selon l'une quelconque des revendications précédentes, dans lequel l'intention d'information comprend une information sémantique.

10. Procédé selon l'une quelconque des revendications précédentes, dans lequel les méta-informations PubSub comprennent la fréquence des mises à jour, les noms de sujet et/ou les noms des connexions FX.

11. Procédé selon l'une quelconque des revendications précédentes, obtenant, par le dispositif passerelle (103), des données de sécurité du courtier (101), dans lequel les données de sécurité permettent au dispositif passerelle (103) de récupérer des données d'intérêt cryptées (D).

12. Procédé selon l'une quelconque des revendications précédentes, dans lequel le dispositif passerelle (103) comprend une passerelle de dispositif périphérique.

13. Système d'identification et de récupération d'informations industrielles dans un réseau d'automatisation PubSub OPC UA,
dans lequel le système est configuré pour réaliser le procédé selon l'une quelconque des revendications 1 à 12.

14. Support de stockage lisible par ordinateur, comprenant des instructions d'ordinateur, dans lequel, lorsque les instructions d'ordinateur sont exécutées sur un ordinateur, l'ordinateur est autorisé à réaliser le procédé selon l'une quelconque des revendications 1 à 12.

15. Produit de programme informatique, dans lequel, lorsque le produit de programme informatique fonctionne sur un ordinateur, l'ordinateur est autorisé à réaliser le procédé selon l'une quelconque des revendications 1 à 12.
